# EUROPEAN PATENT SPECIFICATION

(11) **EP 3 213 856 B1**
(45) Date of publication and mention of the grant of the patent: **27.11.2024**
(21) Application number: 17153920.8
(22) Date of filing: 31.01.2017
(51) Int. Cl.: B23K 20/12, B23K 20/24, B23K 101/00

(54) **PROCESS FOR CONDITIONING OF A SHEAR ZONE FOR FRICTION WELDING**
VERFAHREN ZUR KONDITIONIERUNG EINER SCHWEISSZONE FÜR REIBSCHWEISSEN
PROCÉDÉ DE CONDITIONNEMENT D'UNE ZONE DE SOUDURE PAR FRICTION

(30) Priority: 25.02.2016 GB 201603247
(43) Date of publication of application: 06.09.2017
(73) Proprietor: Rolls-Royce plc, London N1 9FX (GB)
(72) Inventor: Bray, Simon, Derby, Derbyshire DE24 8BJ (GB); Walpole, Andrew, Derby, Derbyshire DE24 8BJ (GB); Forsdike, John, Derby, Derbyshire DE24 8BJ (GB); Baxter, Gavin, Derby, Derbyshire DE24 8BJ (GB)
(74) Representative: Rolls-Royce plc

(56) References cited:
- EP-A2- 1 526 252
- WO-A1-2006/022819
- JP-B2- 3 104 724
- US-A- 4 712 724
- US-A- 5 156 316

## Description

### Field of the invention

The present invention relates to friction welding. More particularly, the invention relates to friction welding components of high-temperature capable alloys ("Superalloys"), more specifically coarse grain superalloys.

### Background

Friction welding processes are high integrity joining methods used to fabricate rotating components within gas turbine engines, such as blade integrated discs (blisks), HP, IP, LP discs, drums and shafts in materials such as titanium, nickel superalloys and steel. For manufacture of such components, common friction welding processes include; rotary friction welding (RFW) and linear friction welding (LFW). Examples of rotary friction welding processes are inertia (IFW), direct drive (DDFW), hybrid inertia-direct drive (HFW) and orbital (OFW) methods.

Although one continuous process in practice, several distinct phases are known to play a role in friction welding. In a first phase, welding surfaces of the two workpieces are brought into surface contact by the application of a programmed monotonically increasing force or pressure profile and the parts are heated up by relative motion, for example by rotation or oscillation, of one surface with respect to the other. Localized frictional heating occurs, but there is no significant axial shortening of the workpieces in this first phase. The heat generated results in thermal softening such that in the second phase a soft, viscoplastic layer is formed between the workpieces. Collectively, these two phases are commonly known as the "conditioning stage" of the welding process.

During a third phase, Heat Affected Zones (HAZs) in the workpieces extend as a result of conduction of heat away from the weld interface. The application of an upsetting axial force in this phase extrudes softened material from the interface layer (or "shear zone"). This "burn-off" process creates a flash resulting in axial shortening of the welded component. In a final phase, as the two work pieces come to rest, the upsetting force consolidates the joint whilst the components cool down.

In summary, conventional processes have two main stages. In the first "conditioning" stage, initial contact between the weld surfaces produces friction which raises the temperature at the interface. Each material has an associated temperature at which it becomes sufficiently deformable that it can be displaced by the application of axial load. This is known as "upsetting". The workpieces are pushed together, with material being expelled from a plasticised zone at the interface ("burn-off") as a flash.

As the performance requirements of gas turbine engines have increased, this has led to the introduction of new or improved superalloys with higher temperature capability. As a result, the energy required to weld these materials by the described prior art processes increases. Similarly, component geometry may necessitate an increase in required energy due to increasing weld volumes. It is also known to those skilled in the art that it is preferable to weld these superalloy materials at lower peripheral speeds compared with other aerospace alloys.

Additionally, increasing temperature requirements have driven the development and use of coarser grained alloy microstructures. These coarser grained alloys require welding at slower speeds (relative to finer grained alloys). For inertia welding a lower speed requires higher inertia to maintain total energy input to the weld. In some cases the geometry and/or material and/or microstructure of components require processing conditions, such as inertia and/or total energy and/or total rotational speed and/or drive torque which are beyond the limits of existing welding machines. One obvious solution is the development of welding machines with increased capabilities. Such development is at a significant cost to the manufacturer. An alternative solution which permits increased capability of already existing machines is desirable.

United States patent US 4712724 discloses a method of friction welding wherein the parts to be welded, of materials with inherent Young's moduli, are jigged coaxially, set to rotate with respect to each other under an axial pressure recurrently varying with a frequency which is in inverse proportion to the lower value of the Young's moduli and to the diameter, or to the smaller diameter, of the parts while these are being heated up for welding, whereby, the value of the frequency varies over a range between + and -15 percent and the parts are then upset-forged together.

Japanese patent JP 3104724 B2 discloses a method and a device for friction joining components. The method involves periodically changing pressure applied to both components to promote the discharge of impure inclusions.

United States patent US 5156316 discloses a friction welding temperature measurement and process control system. The system has a friction welding means that produces a friction weld, a temperature sensing means that is electrically attached to the welding means and provides an electrical signal, and a control means that processes the electrical signal to control the friction welding means. The weld acts as a resistor due to its high temperature as compared to the surrounding material such that the current in the electrical signal changes after its interacts with the weld. The change in current can be measured and the temperature of the weld can be determined.

International patent application WO 2006/022819 A1 discloses a method and system for direct drive friction welding that reduces upset variation or reduces welded part length variation. The system has a spindle that is configured to engage a component and a drive that is operatively connected to the spindle to rotate the spindle, and associated microprocessor based devices to store data and command the drive. The method comprises a sample friction weld of parts, and storing data in connection therewith, in order to generate a profile of upset versus speed. The method then, through the modulation of spindle drive torque, uses this profile for additional production friction welds having upset versus speed characteristics that are consistent with the profile of the sample weld during a deceleration phase of the friction weld.

European patent application EP 1526252 A2 discloses a rotor assembly of an axial flow turbine engine that has a bladed ring with a solid state weld joint between a central disk hub and the ring of the bladed ring. The rotor assembly is prepared by bonding a plurality of turbine blades to a coarse-grain ring so that the turbine blades extend outwardly from the ring, providing a fine-grain central disk hub, and solid-state inertia welding the central disk hub and the ring of the bladed ring at a solid state weld joint.

### Summary

The present invention provides a method for conditioning a shear zone of components to be welded in a friction welding process as set out in the appended claims.

In accordance with the present invention there is provided a method of claim 1.

Whilst a trial and error approach to the energy input through friction can achieve the desired result, it is preferable to control the energy input. Desirably, the energy input is controlled to generate a pre-determined temperature profile in the shear zone, the temperature profile is selected to ensure that no parts of the shear zone experience temperatures and pressures which create undesirable phase transformations within the shear zone during the conditioning phase. By controlling the energy input within defined limits during the conditioning phase, the quality of the weld achieved after upset may be improved.

Heat generated may be left to dissipate through the shear zone unaided. Optionally, the surrounding environment to the shear zone may be controlled to accelerate or slow conduction of heat through the shear zone. For example, a current may be generated in air surrounding the shear zone to generate a temperature gradient across the shear zone and influence the rate of heat transfer through the shear zone. These contemplated options are considered to be within the scope of "allowing the heat to disperse by conduction through the shear zone" as used in the accompanying claims.

Once the temperature profile has been achieved in the shear zone, the component can be welded by performing the following steps;
e) applying an upsetting force resulting in concomitant generation of burn-off at the weld interface;
f) maintaining the upsetting force as the surfaces of the component come to rest and commence cooling to consolidate the weld; and
g) removing the upsetting force.

In this context, the "shear zone" is to be taken to mean a region of the heat affected zone adjacent the weld interface which is upset during application of the upsetting force in step e) of the method. The skilled addressee will understand how the size of a shear zone can be controlled if the thermal properties and dimensions of the component to be welded are known. In this context, "undesirable phase transformations" should be taken to mean phase transformation during the pre-heat phase of a significant proportion of the weld volume. It will be understood that an amount of phase transformation is tolerable and unavoidable, provided the resulting weld meets an acceptable standard. As an example, liquation on a macroscopic scale is considered undesirable.

The temperature profile may include an associated tolerance range which defines acceptable deviations from a nominal pre-defined temperature profile.

The step of applying friction may involve using conventional rotary friction welding apparatus, rotating relative to each other the surfaces to be welded.

The step of predetermining the temperature profile may involve, in trials, monitoring changes in temperature at various positions along the shear zone whilst a known amount of energy is introduced at the weld interface and/or investigating the presence of undesirable phase changes in the weld volume after the energy has been introduced.

The performance and timing of steps b), c) and d) may be "adaptively controlled'. This adaptive control may involve providing a machine controller to control operation of the machine to introduce energy to the weld interface at a predetermined rate to create the pre-determined temperature profile in the shear zone. The machine controller may incorporate a feedback loop whereby it continually monitors parameters of the machine for consistency with a stored temperature profile model and adjusts them when they deviate from the model. For example, the machine controller may control the spin rate of a flywheel of a rotary welding machine and optionally the application of the upsetting force by the machine. The machine controller may further be operable to control the subsequent steps e), f) and g) of the method in sequence immediately upon completion of steps a) to d).

Another benefit of this approach is to influence the cooling phase as a result of creating a desired temperature profile.

The components welded may comprise the same or different coarse grain superalloy, for example different alloys or different microstructures of the same alloys, each being a coarse grain superalloy. Where the weld is to be made between materials with different properties, a separate temperature profile may be defined for each component.

In the particular case of rotary friction welding, the inventors have recognised that the onset of plastic flow (or "upsetting") is defined by the expulsion of flash from the weld interface. The conditioning phase of a friction welding process facilitates the onset of plastic flow by lowering the flow stress. This is conventionally achieved by, for example: increasing the temperature to dissolve strengthening precipitates in the material. These same principles can be expected to be equally true for all friction welding methods. For example (but without limitation) the friction welding process may be a linear, inertia, direct drive, orbital or hybrid rotary friction welding process.

Nickel superalloys often used in the manufacture of gas turbine engine components are generally more prone to instability during upset (unstable burn-off rate). The inventor's experience has demonstrated that lower speed and lower pressure will control this unstable burn-off rate.

The inventors conclude that, if an unstable burn-off rate is to be avoided, coarse grain superalloys must be welded more slowly. These materials also require more energy in the conditioning phase compared with a finer grain material. Consequently, the inertia required to produce optimal inertia weld characteristics in a welded coarse grain material is significantly greater verses a fine grain material. The inertia and energy, or torque required may exceed the capabilities (e.g. total stored flywheel energy or drive torque) of conventional equipment. An acceptable weld is not achievable using conventional methods and equipment.

The above analysis is based upon starting the welding process from normal ambient conditions.

The method of the invention introduces a new, additional step to conventional methods, a "pre-conditioning" step. In this step, the characteristics of material in the weld volume are altered such that a transition from the pre-conditioned weld interface to viscoplasticity and an acceptable burn-off is achievable using the inertia/ total energy/drive force available with prior known equipment. It will be appreciated that, due to the sensitivity of these superalloys to temperature and pressure and the deleterious consequences of undesirable phase changes, the temperature gradient starting from normal ambient conditions (typically in the region of standard ambient temperature and pressure (SATP); 298.15 K (25 °C, 77 °F)) rising towards the temperature at which viscoplasticity occurs must be carefully controlled.

For any given alloy, the optimum temperature profile for the pre-conditioning phase can be determined. One way to determine the optimum temperature profile is through trial and error. For example, samples of the material are arranged for welding in a conventional rotary welding machine. The physical and chemical composition of the material of the samples at SATP will be known and critical temperatures at which deleterious phase changes occur in the material will also be known or can be found through experimentation. Temperature changes within the sample weld volume can be monitored using conventional thermal sensing technology. For example, thermocouples may be positioned throughout the weld volume and their output received and monitored by a processor. Other thermal sensing methods are no doubt known to the skilled addressee and are equally suited to this purpose.

In the example of a rotary welding process, power output as a proportion of input for a given rotary machine can be pre-determined. The deceleration rate of the flywheel and hence the torque introduced to the weld interface can also be determined. The energy introduced can be correlated to the temperature profile in the weld volume (including the shear zone). From known thermo-physical properties of the sample material, the resulting temperature profile can be modelled. Working backwards from the result, using the measurable parameters of the wheel such as torque and/or energy input at selected spin rates the required temperature profile can be generated. A time-base model of appropriate machine parameters (e.g. speed, pressure, flywheel inertia) required to achieve the pre-determined temperature profile can be generated and used as reference data for a machine controller.

In a method in accordance with the invention, the controller may be used to monitor these measurable parameters and effect adjustments where these parameters make significant deviations from the reference data. Upper and lower tolerance limits for the reference data may be defined within which deviations from the reference data are not expected significantly to impact on the phase structure of the components to be friction welded. The controller may further be configured to initiate an alarm signal recognisable by a user as an indication that the tolerances have not been met. With this knowledge, a decision can be made to cease the welding process, optionally scrap parts or process the weld zone to a state where an acceptable welding process can be re-commenced.

Compressive pressure applied in this pre-conditioning step is low compared to the conventional welding pressure in order to avoid excessive microstructural change on a macro level. At times during this step, the pressure may be modulated within pre-defined bounds and may include zero force or parts moved out of contact. Using the determinable/measurable parameters, effective friction at the weld interface can be measured and the controller configured actively to modulate the pressure in order to maintain a bounding effective friction co-efficient. This method can be used independently or in combination with temperature sensing as a means of controlling the pre-conditioning step.

The pre-conditioning phase brings the weld zone of the components to a state from which viscoplasticity can be achieved using conventional equipment, furthermore, it can be achieved such that, on subsequent application of upsetting force, a stable burn-off is achieved and a good quality weld will result.

The controller can be programmed to cause the welding machine to perform the conditioning and upsetting phases in sequence immediately upon completion of the pre-conditioning phase. Thus, in the case of rotary friction welding, the controller can be operable to monitor and control spinning of the flywheel and also axial movement of the machine to effect upsetting of the viscoplastic material in the weld volume. It will be understood that the invention is not limited to rotary friction welding. It will be within the capabilities of the skilled addressee to generate a controller and a model for the controller to perform a pre-conditioning phase using alternative known friction welding apparatus.

### Brief description of the drawings

An embodiment of the method is now further described with reference to the accompanying drawings in which;
Figure 1 shows graphically the temperature gradient introduced to a shear zone of components welded in accordance with an embodiment of the invention;
Figure 2 shows a logic chart setting out process steps and a decision tree for controlling a temperature gradient introduced into the shear zone in accordance with an embodiment of the invention; and
Figure 3 shows a cyclic schematic for the weld shear zone represented in Figure 1.

### Detailed description

The following summarises a practical embodiment of the method of the invention using a conventional rotary friction welding machine programmed with an inertia friction weld (IFW) auto-cycle.
1. With weld components aligned, run up the spindle (with/without flywheel);
2. Make one or more contacts between the faying surfaces until the required preheat is met; methods to determine this include but are not limited to:
   a. use of thermal measurement (e.g. thermocouples, pyrometry) to monitor temperature and control feedback loop AND/OR
   b. modelling to calculate energy input (work done, thermal conductivity, deceleration of flywheels etc.) AND/OR
   c. pre-determined cycle/method based on prior knowledge;
   NOTE: The flywheel speed must not drop to below a speed where any time taken to re-spin exceeds a limit required to maintain the desired temperature profile in the part.
3. Decouple or reduce pressure (if required);
4. Adjust spindle speed AND/OR inertia to predetermined settings for welding (if required); and
5. Conduct weld cycle.

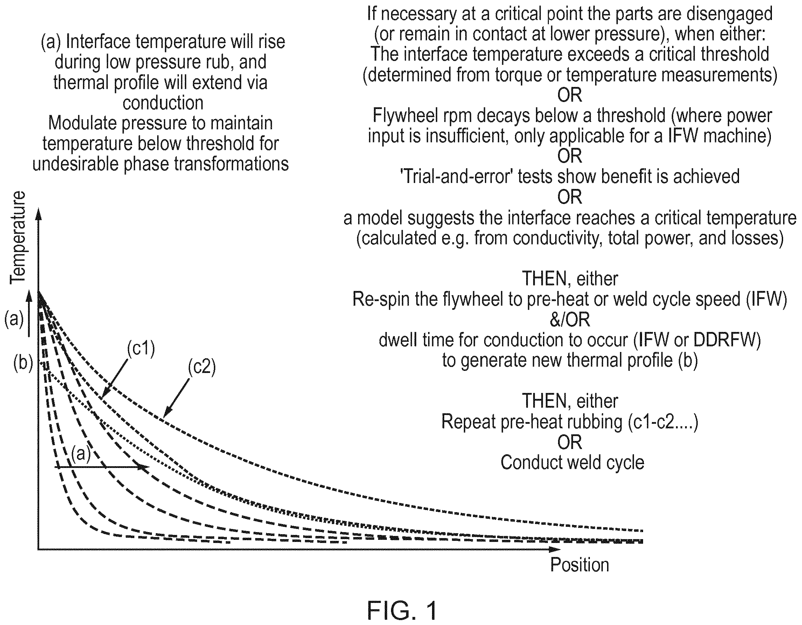

### Methodology for step 2 is further detailed in Figure 1.

A machine controller is configured to use the torque and/or effective friction and/or temperature and/or energy and/or time based model to measure the temperature gradient at the weld interface. As an alternative, power, torque energy or effective friction might be measured or derived from flywheel deceleration in the case of an inertia weld. A feedback loop in the controller operates then to modulate the pressure applied by the machine in order to maintain a bounding effective friction co-efficient (or corresponding torque or power as a proxy therefor) at the weld interface. The pressure applied in this pre-conditioning step is significantly low compared to the pressure required to upset the weld. This avoids excessive undesirable microstructural change on a macro level during the pre-conditioning step. Typically the energy in the pre-conditioning phase will be additional to the energy available at the required conventional welding speeds of available inertia at conventional weld pressures. For example in a conventional superalloy weld requiring 120% of available energy at maximum inertia and preferred rotational speeds requires the extra 20% of energy to be delivered during the pre-conditioning phase using a lower pressure and higher rotational speed. If the higher rotational speed for pre-conditioning is beyond the limits of the flywheel or machine capability then a stepped re-spin can be used (refer to steps 3 and 4 above).

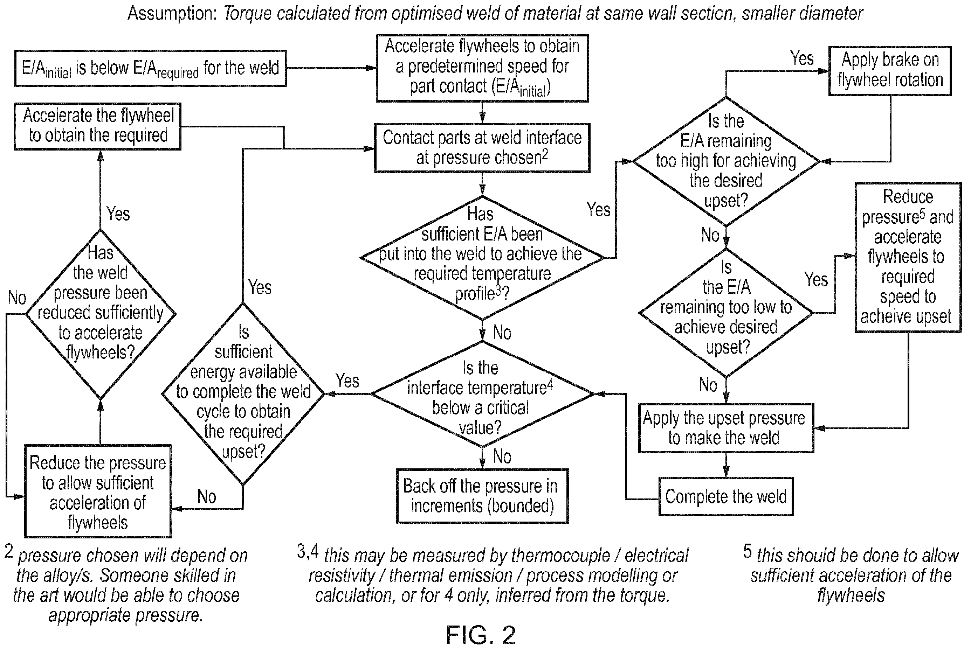

Figure 2 illustrates an example of the logic applied by a controller in performing a method in accordance with the invention. In the shown embodiment, the controller controls the speed and axial movement of a flywheel in a rotary friction welding process. In the Figure, E represents energy input and A represents unit area. By following the steps in the logic chart, the controller can generate a plurality of temperature gradients across the shear zone. These temperature gradients are represented in Figure 1 as a number of curves. The process enables the controller incrementally to move towards a profile which achieves the required peak temperature of step a) without exceeding that temperature within the shear zone. Once that temperature profile is achieved, then the component can be welded from the pre-conditioned workpieces.

Relative to the energy/power/inertia limits of existing friction welding machines, the modulation and feedback/control of pressure during a pre-conditioning phase in accordance with the method of the invention provides the following benefits:
1. Extends the capability of existing friction welding machines.
2. Reduces the peripheral contact speed at the point of the upsetting phase in order to weld within a preferred welding speed range.
3. Reduces the energy required during the upsetting phase of the IFW cycle (e.g. for large high gamma prime vol. fraction Ni parts).
4. A successful weld with limited inertia capability (linked to 1).
5. The ability to weld larger faying surface areas.
6. In a direct drive system, reducing the required torque for a given system.
7. Influences the cooling phase as a result of creating a desired temperature profile for managing residual stress or microstructural transformations (e.g. martensite formation in steel).
8. The method can be used to produce a desired cooling rate for a given size of HAZ.

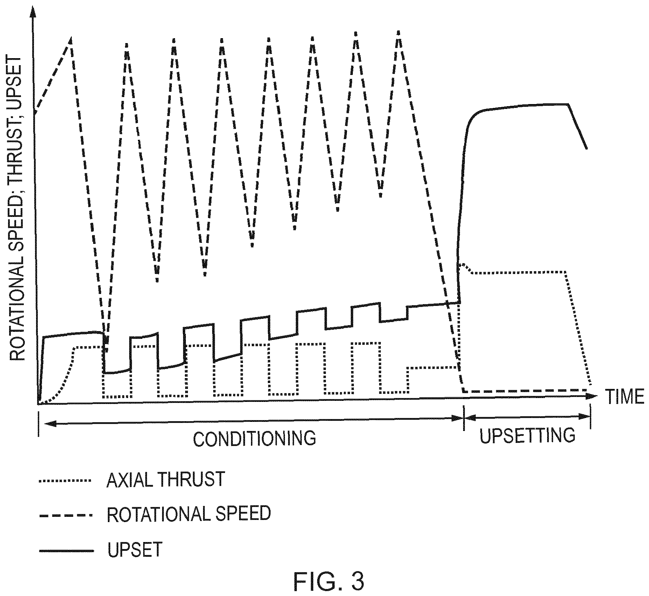

Figure 3 shows the cyclical variations over time of rotational speed, axial thrust and upset occurring during the weld process represented in Figure 1 when the weld process is performed using inertia weld equipment. As can be seen rotational speed and thrust are cycled together with a maximum thrust applied at peak speeds resulting in a gradual conditioning of the shear zone represented by the gradual increase in upset. When the desired temperature gradient has been achieved across the shear zone, full upset and welding can be achieved.

## Claims

1. A method for conditioning a shear zone of components to be welded in a friction welding process, where each component comprises a coarse grain superalloy, the method comprising:
a) pre-determining a temperature profile for which the material of the shear zone approaches viscoplasticity but does not undergo undesirable phase transformations and identifying a quantum of energy needed to generate a peak temperature of the pre-determined temperature profile;
b) introducing friction at an interface of two opposing surfaces of the components to be welded sufficient to generate the peak temperature whilst simultaneously applying a pressure at the interface, wherein the applied pressure is below a pressure which will cause upset at the interface;
c) withdrawing the friction and/or pressure allowing the heat to disperse by conduction through the shear zone, thereby reducing the maximum temperature of the shear zone to below the peak temperature;
d) after the temperature at the surface has fallen below the peak temperature, repeating steps b) and c); and
repeating step d) as necessary until the pre-determined temperature gradient is achieved throughout the shear zone.

2. A method as claimed in claim 1 further comprising;
e) after the pre-determined temperature gradient has been achieved throughout the shear zone, applying an upsetting force to the interface resulting in concomitant generation of burn-off at the surface;
f) maintaining the upsetting force as the surfaces come to rest and commence cooling to consolidate the weld; and
g) removing the upsetting force.

3. A method as claimed in claim 1 or claim 2 wherein the steps of applying and withdrawing the friction and/or pressure involve dynamically adjusting a relative rubbing speed at the interface to follow a predetermined rubbing speed profile.

4. A method as claimed in any of claims 1 to 3 wherein the steps of applying and withdrawing the friction and/or pressure involve dynamically adjusting a forge force at the surfaces to be welded to follow a predetermined forge force profile.

5. A method as claimed in any preceding claim wherein the steps of applying and withdrawing the friction and/or pressure involve monitoring of the temperature at or near the interface and adaptively controlling the amount of friction applied in response to changes in the monitored temperature.

6. A method as claimed in any preceding claim wherein the step of applying friction involves rotating one of the surfaces relative to the other using conventional rotary friction welding apparatus.

7. A method as claimed in any one of claims 1 to 6 wherein step a) involves monitoring changes in temperature at various positions within the shear zone whilst a known amount of energy is introduced at the interface and/or investigating the presence of undesirable phase changes in the shear zone after the energy has been introduced.

8. A method as claimed in claim 2 or claim 2 plus any one of claims 3 to 7 involving providing a machine controller to control operation of a machine to introduce energy to the surfaces to be welded at a predetermined rate to create the predetermined temperature profile in the shear zone.

9. A method as claimed in claim 8 wherein the machine controller incorporates a feedback loop whereby it continually monitors parameters of the machine for consistency with a stored temperature profile model and adjusts them when they deviate from the model.

10. A method as claimed in claim 8 wherein the machine controller controls the spin rate of a flywheel of a rotary welding machine.

11. A method as claimed in claim 8 wherein the machine controller further controls the application of an upsetting force by the machine.

12. A method as claimed in any one of claims 8 to 11 wherein the machine controller is further operable to control the subsequent steps e), f) and g) in sequence immediately upon completion of steps a) to d).

13. A method as claimed in any one of claims 2 to 12 further comprising the steps of removing "upset" material displaced at the interface, inspecting the weld and surface finishing the welded components.

14. A method as claimed in any preceding claim wherein the components comprise the same coarse grain superalloy.

15. A method as claimed in any one of claims 1 to 13 wherein the components comprise different coarse grain superalloys.

## Patentansprüche

1. Verfahren zur Konditionierung einer Scherzone von Komponenten, die in einem Reibschweißprozess zu schweißen sind, wobei jede Komponente eine grobkörnige Superlegierung umfasst, wobei das Verfahren Folgendes umfasst:
a) Vorbestimmen eines Temperaturprofils, für welches das Material der Scherzone sich Viskoplastizität nähert, aber keine unerwünschten Phasentransformationen durchläuft, und Identifizieren eines Quantums an Energie, das erforderlich ist, um eine Spitzentemperatur des vorbestimmten Temperaturprofils zu erzeugen;
b) Einführen von Reibung an einer Schnittstelle von zwei gegenüberliegenden Oberflächen der zu schweißenden Komponenten, die ausreicht, um die Spitzentemperatur zu erzeugen, während gleichzeitig ein Druck auf die Schnittstelle ausgeübt wird, wobei der ausgeübte Druck unter einem Druck ist, der Stauchung an der Schnittstelle bewirken wird;
c) Entziehen der Reibung und/oder des Drucks, wodurch ermöglicht wird, dass die Wärme durch Leitung durch die Scherzone dispergiert, wodurch die maximale Temperatur der Scherzone auf unter die Spitzentemperatur reduziert wird;
d) nachdem die Temperatur an der Oberfläche unter die Spitzentemperatur gefallen ist, Wiederholen der Schritte b) und c); und
Wiederholen von Schritt d) nach Bedarf, bis der vorbestimmte Temperaturgradient in der gesamten Scherzone erreicht ist.

2. Verfahren nach Anspruch 1, ferner umfassend;
e) nachdem der vorbestimmte Temperaturgradient in der gesamten Scherzone erreicht worden ist, Ausüben einer Stauchkraft auf die Schnittstelle, was zu gleichzeitiger Erzeugung von Abbrand an der Oberfläche führt;
f) Aufrechterhalten der Stauchkraft, während die Oberflächen zur Ruhe kommen und mit dem Abkühlen beginnen, um die Schweißung zu festigen; und
g) Entfernen der Stauchkraft.

3. Verfahren nach Anspruch 1 oder Anspruch 2, wobei die Schritte des Ausübens und Entziehens der Reibung und/oder des Drucks dynamisches Anpassen einer relativen Gleitgeschwindigkeit an der Schnittstelle involvieren, um einem vorbestimmten Gleitgeschwindigkeitsprofil zu folgen.

4. Verfahren nach einem der Ansprüche 1 bis 3, wobei die Schritte des Ausübens und Entziehens der Reibung und/oder des Drucks dynamisches Anpassen einer Schmiedekraft an den zu schweißenden Oberflächen involvieren, um einem vorbestimmten Schmiedekraftprofil zu folgen.

5. Verfahren nach einem vorhergehenden Anspruch, wobei die Schritte des Ausübens und Entziehens der Reibung und/oder des Drucks Überwachen der Temperatur an oder nahe der Schnittstelle und adaptives Steuern der ausgeübten Menge an Reibung als Reaktion auf Änderungen der überwachten Temperatur involvieren.

6. Verfahren nach einem vorhergehenden Anspruch, wobei der Schritt des Ausübens von Reibung Rotieren von einer der Oberflächen relativ zu der anderen unter Verwendung eines herkömmlichen Rotationsreibschweißgeräts involviert.

7. Verfahren nach einem der Ansprüche 1 bis 6, wobei Schritt a) Überwachen von Temperaturänderungen an verschiedenen Positionen innerhalb der Scherzone, während eine bekannte Menge an Energie an der Schnittstelle eingeführt wird, und/oder Untersuchen des Vorhandenseins von unerwünschten Phasenänderungen in der Scherzone, nachdem die Energie eingeführt worden ist, involviert.

8. Verfahren nach Anspruch 2 oder Anspruch 2 plus einem der Ansprüche 3 bis 7, involvierend Bereitstellen einer Maschinensteuerung, um Betrieb einer Maschine zu steuern, um Energie zu den zu schweißenden Oberflächen bei einer vorbestimmten Rate einzuführen, um das vorbestimmte Temperaturprofil in der Scherzone zu schaffen.

9. Verfahren nach Anspruch 8, wobei die Maschinensteuerung eine Rückkopplungsschleife enthält, wodurch sie Parameter der Maschine kontinuierlich auf Übereinstimmung mit einem gespeicherten Temperaturprofilmodell überwacht und sie anpasst, wenn sie von dem Modell abweichen.

10. Verfahren nach Anspruch 8, wobei die Maschinensteuerung die Drehrate eines Schwungrads einer Rotationsschweißmaschine steuert.

11. Verfahren nach Anspruch 8, wobei die Maschinensteuerung ferner die Ausübung einer Stauchkraft durch die Maschine steuert.

12. Verfahren nach einem der Ansprüche 8 bis 11, wobei die Maschinensteuerung ferner bedienbar ist, um die nachfolgenden Schritte e), f) und g) unmittelbar nach Abschluss der Schritte a) bis d) nacheinander zu steuern.

13. Verfahren nach einem der Ansprüche 2 bis 12, ferner umfassend die Schritte des Entfernens von "Stauch"-Material, das an der Schnittstelle angeordnet ist, Überprüfens der Schweißung und Oberflächenbearbeitens der geschweißten Komponenten.

14. Verfahren nach einem vorhergehenden Anspruch, wobei die Komponenten die gleiche grobkörnige Superlegierung umfassen.

15. Verfahren nach einem der Ansprüche 1 bis 13, wobei die Komponenten unterschiedliche grobkörnige Superlegierungen umfassen.

## Revendications

1. Procédé permettant le conditionnement d'une zone de cisaillement de composants à souder dans un procédé de soudage par friction, où chaque composant comprend un superalliage à gros grains, le procédé comprenant :
a) la prédétermination d'un profil de température pour lequel le matériau de la zone de cisaillement se rapproche de la viscoplasticité mais ne subit pas de transformations de phase indésirables et l'identification d'un quantum d'énergie nécessaire pour générer une température de pointe du profil de température prédéfini ;
b) l'introduction d'une friction au niveau d'une interface de deux surfaces opposées des composants à souder qui est suffisante pour générer la température de pointe tout en appliquant simultanément une pression au niveau de l'interface, ladite pression appliquée étant inférieure à une pression qui entraîne un refoulement au niveau de l'interface ;
c) la suppression de la friction et/ou de la pression, ce qui permet à la chaleur de se disperser par conduction à travers la zone de cisaillement, réduisant ainsi la température maximale de la zone de cisaillement en dessous de la température de pointe ;
d) après que la température à la surface est tombée en dessous de la température maximale, la répétition des étapes b) et c) ; et
la répétition de l'étape d) si nécessaire jusqu'à ce que le gradient de température prédéfini soit atteint dans toute la zone de cisaillement.

2. Procédé selon la revendication 1, comprenant en outre :
e) après que le gradient de température prédéfini a été atteint dans toute la zone de cisaillement, l'application d'une force de refoulement à l'interface entraînant la génération concomitante de brûlures à la surface ;
f) le maintien de la force de refoulement tandis que les surfaces viennent à s'immobiliser et commencent à refroidir pour consolider la soudure ; et
g) l'élimination de la force de refoulement.

3. Procédé selon la revendication 1 ou la revendication 2, lesdites étapes d'application et de retrait de la friction et/ou de la pression impliquant le réglage dynamique d'une vitesse de frottement relative au niveau de l'interface pour suivre un profil de vitesse de frottement prédéfini.

4. Procédé selon l'une quelconque des revendications 1 à 3, lesdites étapes d'application et de retrait de la friction et/ou de la pression impliquant le réglage dynamique d'une force de forge au niveau des surfaces à souder pour suivre un profil de force de forge prédéfini.

5. Procédé selon une quelconque revendication précédente, lesdites étapes d'application et de retrait de la friction et/ou de la pression impliquant la surveillance de la température au niveau ou à proximité de l'interface et la commande adaptative de la quantité de friction appliquée en réponse aux changements de la température surveillée.

6. Procédé selon une quelconque revendication précédente, ladite étape d'application de friction impliquant la rotation de l'une des surfaces par rapport à l'autre à l'aide d'un appareil de soudage par friction rotatif classique.

7. Procédé selon l'une quelconque des revendications 1 à 6, ladite étape a) impliquant la surveillance des changements de température au niveau de diverses positions dans la zone de cisaillement pendant qu'une quantité connue d'énergie est introduite au niveau de l'interface et/ou la recherche de la présence de changements de phase indésirables dans la zone de cisaillement après l'introduction de l'énergie.

8. Procédé selon la revendication 2 ou la revendication 2 plus l'une quelconque des revendications 3 à 7, impliquant la fourniture d'un dispositif de commande de machine pour commander le fonctionnement d'une machine afin d'introduire de l'énergie sur les surfaces à souder à une vitesse prédéfinie pour créer le profil de température prédéfini dans la zone de cisaillement.

9. Procédé selon la revendication 8, ledit dispositif de commande de machine incorporant une boucle de rétroaction grâce à laquelle il surveille en permanence les paramètres de la machine pour vérifier leur cohérence avec un modèle de profil de température stocké et les règle lorsqu'ils s'écartent du modèle.

10. Procédé selon la revendication 8, ledit dispositif de commande de machine commandant la vitesse de rotation d'un volant d'inertie d'une machine de soudage rotative.

11. Procédé selon la revendication 8, ledit dispositif de commande de machine commandant en outre l'application d'une force de refoulement par la machine.

12. Procédé selon l'une quelconque des revendications 8 à 11, ledit dispositif de commande de machine servant en outre à commander les étapes suivantes e), f) et g) en séquence immédiatement après l'achèvement des étapes a) à d).

13. Procédé selon l'une quelconque des revendications 2 à 12, comprenant en outre les étapes d'élimination du matériau « refoulé » déplacé au niveau de l'interface, l'inspection de la soudure et la finition de la surface des composants soudés.

14. Procédé selon une quelconque revendication précédente, lesdits composants comprenant le même superalliage à gros grains.

15. Procédé selon l'une quelconque des revendications 1 à 13, lesdits composants comprenant différents superalliages à gros grains.
